Europäisches Patentamt

European Patent Office

Office européen des brevets

(19)

(11) Veröffentlichungsnummer : **0 293 727 B1**

# (12) EUROPÄISCHE PATENTSCHRIFT

(45) Veröffentlichungstag der Patentschrift :
06.03.91 Patentblatt 91/10

(51) Int. Cl.$^5$ : **B60R 27/00, B60N 3/06**

(21) Anmeldenummer : 88108300.0

(22) Anmeldetag : 25.05.88

(54) Vorrichtung zum Schonen der Schuhe des Fahrers eines Kraftfahrzeugs.

(30) Priorität : 03.06.87 DE 3718581

(43) Veröffentlichungstag der Anmeldung :
07.12.88 Patentblatt 88/49

(45) Bekanntmachung des Hinweises auf die
Patenterteilung :
06.03.91 Patentblatt 91/10

(84) Benannte Vertragsstaaten :
AT BE CH DE ES FR GB GR IT LI LU NL SE

(56) Entgegenhaltungen :
DE-A- 2 637 801
DE-U- 8 707 943
GB-A- 722 551

(73) Patentinhaber : Steinhilber, Helmut
Sonnenbergstrasse 40
CH-6052 Hergiswil (CH)

(72) Erfinder : Steinhilber, Helmut
Sonnenbergstrasse 40
CH-6052 Hergiswil (CH)

(74) Vertreter : Patentanwälte Dipl.-Ing. Klaus
Westphal Dr. rer. nat. Bernd Mussgnug Dr.
rer.nat. Otto Buchner
Waldstrasse 33
W-7730 VS-Villingen-Schwenningen (DE)

EP 0 293 727 B1

**Beschreibung**

Die Erfindung betrifft eine Vorrichtung zum Schonen der Schuhe des Fahrers eines Kraftfahrzeugs mit einer Auflageeinrichtung zum Auflegen des Fusses des Fahrers. Eine derartige Vorrichtung ist beispielsweise aus DE-U-8 707 943 bekannt.

Der Fahrer eines Kraftfahrzeugs muß während der Fahrt mit dem Fuß häufig zwischen dem Gaspedal und dem Bremspedal wechseln. Da er seinen Fuß mit der Ferse auf dem Boden des Kraftfahrzeugs aufsetzt, reibt der Schuh mit dem Fersenbereich bei diesem Wechsel auf dem Boden des Fahrzeugs. Dies führt zu einem schnellen Verschleiß des Oberleders des Schuhes im Fersenbereich.

Der Erfindung liegt die Aufgabe zugrunde, eine Vorrichtung zu schaffen, die diesen Verschleiß verhindert.

Diese Aufgabe wird bei einer Vorrichtung der eingangs genannten Gattung erfindungsgemäß gelöst durch die Merkmale des kennzeichnenden Teils des Anspruchs 1.

Vorteilhafte Ausführungsformen der Erfindung sind in den Unteransprüchen angegeben.

Erfindungsgemäß ist vor dem Gas- und Bremspedal eine Auflageeinrichtung vorgesehen, auf welcher der Fahrer seinen Fuß auflegt. Die Auflageeinrichtung ist in Querrichtung bewegbar, so daß der auf dieserAuflageeinrichtung aufliegende Fuß bei seiner Bewegung zwischen dem Gaspedal und dem Bremspedal die Auflageeinrichtung mitnimmt. Es bewegt sich somit die Auflageeinrichtung relativ zum Boden des Kraftfahrzeugs, während der Schuh des Fahrers sich gegenüber der Auflageeinrichtung nicht verschiebt. Es tritt somit keine den Schuh verschleißende Reibung auf.

Die Auflageeinrichtung kann in einem Ausführungsbeispiel durch ein oder mehrere in Querrichtung verlaufende Bänder gebildet werden. Diese Bänder sind zweckmäßigerweise über Rollen laufende endlose Bänder. Die Bänder sind straff gespannt, so daß der Fuß des Fahrers eine stabile Auflage hat. Weiter bestehen die Bänder aus einem Material mit einer gewissen Adhäsionswirkung oder mit einer adhäsiven Beschichtung, so daß der Schuh das Band bzw. die Bänder bei seiner Bewegung mitnimmt und nicht auf diesen rutscht.

Um trotz der notwendigen hohen Spannung eine leichte Verschiebbarkeit zu erreichen, sind vorzugsweise mehrere parallel nebeneinander angeordnete Bänder vorgesehen, die jeweils über gesonderte Rollen laufen. Es müssen daher nur die Bänder bewegt werden, auf denen der Schuh des Fahrers tatsächlich aufliegt. Dementsprechend muß auch nur der Reibungswiderstand der diese Bänder umlenkenden Rollen überwunden werden.

Um ein zu starkes Durchbiegen der Bänder unter der Belastung des Fusses zu vermeiden, können erforderlichenfalls zusätzliche Stützrollen zwischen den die Bänder umlenkenden Rollen vorgesehen sein.

Die Achsen der Rollen sind in einem Gestell gelagert, das auf dem Boden des Kraftfahrzeugs liegt und auf diesem rutschfest gehalten wird. Hierzu kann das Gestell mit Schaumstoffstreifen, Klettbefestigungen, Dornen oder dergleichen am Boden angreifen.

Eine preisgünstige Herstellung mit geringem Widerstand der Bewegung des Bandes ergibt sich, wenn die Rollen aus einem selbstschmierenden Kunststoff hergestellt sind.

In einem anderen Ausführungsbeispiel besteht die Auflageeinrichtung aus einer zumindest in Querrichtung vorzugsweise aber in Quer- und Längsrichtung bewegbar angeordneten Platte, auf welcher der Fahrer seinen Fuß aufsetzt.

Die Platte ist vorzugsweise auf einer Grundplatte verschiebbar gelagert. Damit die Platte sich auf der Grundplatte leicht verschieben läßt und sich mit dem aufliegenden Fuß des Fahrers bewegt, läuft die Platte vorzugsweise auf Kugeln, die in Käfigen gehalten sind. Es ist auch möglich, an der Unterseite der Platte Auswölbungen vorzusehen, auf denen die Platte gleitet. Eine allzu leichtgängige Bewegung der Platte ist jedoch nicht erwünscht, da andernfalls der Fuß des Fahrers keinen ausreichenden Halt findet. Erforderlichenfalls ist daher eine Bremseinrichtung vorgesehen, die die Beweglichkeit der Platte auf der Grundplatte verringert. Diese Bremseinrichtung kann aus Schleifgliedern, wie z.B. Bürsten oder Filzbelägen bestehen, die an der Platte angebracht sind und mit der Grundplatte in Berührung stehen.

Diese Schleifglieder können zusätzlich auch den Zweck erfüllen, das Eindringen von Schmutz und Sand unter die Platte zu verhindern.

Es ist auch möglich an der Platte Permanentmagnete anzubringen, die die Platte gegen die ferromagnetische Grundplatte ziehen. Dadurch wird der Anpreßdruck der Platte gegen die Grundplatte erhöht und der Reibungswiderstand der Platte auf der Grundplatte erhöht sich.

Um zuverlässig zu vermeiden, daß der Schuh des Fahrers auf der Oberfläche der Platte rutscht, kann die Oberfläche der Platte eine adhäsive Beschichtung tragen. Es ist auch möglich, auf der Oberfläche der Platte eine Fersenmulde vorzusehen, in die der Fahrer seinen Fuß hineinsetzt. Dadurch wird die Platte bei der Bewegung des Fusses zwischen Gaspedal und Bremspedal nicht nur reibschlüssig, sondern auch formschlüssig mitgenommen. Beim Wechseln zwischen Gaspedal und Bremspedal ändert sich der Winkel des Fusses des Benutzers gegenüber dem Boden des Kraftfahrzeugs und damit gegenüber der Platte geringfügig. Damit diese Winkeländerung nicht zu einer reibenden Drehung des Schuhes in der Fersenmulde führt, kann diese zweckmäßigerweise flexibel an der Platte angebracht sein.

Gegebenenfalls kann die Platte selbst als auf der Grundplatte verschiebbare Fersenmulde ausgebildet sein.

Um dem Fuß des Fahrers einen stabilen Halt zu geben, kann zusätzlich die Platte durch schwache Federkräfte in ihrer Normalstellung gehalten werden, in welcher sich der Fuß des Fahrers auf dem Gaspedal befindet. Zum Bremsen muß der Fahrer die Platte mit seinem Fuß gegen diese Federkraft zum Bremspedal bewegen.

Die Grundplatte ist rutschfest am Boden des Kraftfahrzeugs befestigbar, wozu an der Unterseite der Grundplatte Schaumstoffbeläge, Klettbefestigungen, Dornen oder dergleichen vorgesehen sind.

Die Breite der Vorrichtung ist so gewählt, daß eine Bewegung des auf der Auflageeinrichtung aufliegenden Fusses zwischen Bremspedal und Gaspedal möglich ist. Die Tiefe der Vorrichtung in Längsrichtung (d.h. Fahrtrichtung) ist so gewählt, daß ein bequemes Aufliegen des Fusses möglich ist, wobei in der zweiten Ausführung möglichst auch eine Verschiebbarkeit des Fusses mit der Platte bzw. Fersenmulde in Längsrichtung vorhanden sein soll. Die Höhe der Vorrichtung soll so gering wie möglich sein.

Die Ausbildung der Auflageeinrichtung mit einem Gestell oder einer Grundplatte, die in das Fahrzeug gelegt werden, ist für die Nachrüstung bevorzugt. Bei einer serienmäßigen Ausstattung des Fahrzeugs kann in der Bodenwanne eine Vertiefung vorgesehen sein, in welcher die Auflageeinrichtung bündig mit der Bodenebene bewegbar gelagert ist.

Ebenso besteht die Möglichkeit in einer in das Fahrzeug eingelegten Fußmatte eine Aussparung für die Auflageeinrichtung vorzusehen, so daß diese im wesentlichen bündig mit der Oberfläche der Fußmatte ist.

Im folgenden wird die Erfindung anhand von in der Zeichnung dargestellten Ausführungsbeispielen näher erläutert :

Es zeigen

Figur 1 – eine Seitenansicht einer Vorrichtung gemäß der Erfindung in einer ersten Ausführungsform,

Figur 2 – eine Stirnansicht dieser Vorrichtung,

Figur 3 – eine Draufsicht auf diese Vorrichtung,

Figur 4 – eine Stirnansicht der Vorrichtung in ein Kraftfahrzeug eingesetzt,

Figur 5 – eine Seitenansicht einer Vorrichtung in einer zweiten Ausführungsform gemäß der Schnittlinie V – V in Figur 6,

Figur 6 – die Vorrichtung der Figur 5 in einem Schnitt gemäß der Linie VI – VI in Figur 7,

Figur 7 – eine Draufsicht auf die Vorrichtung dieser zweiten Ausführungsform und

Figur 8 – eine Figur 6 entsprechende Darstellung einer Abwandlung der zweiten Ausführungsform.

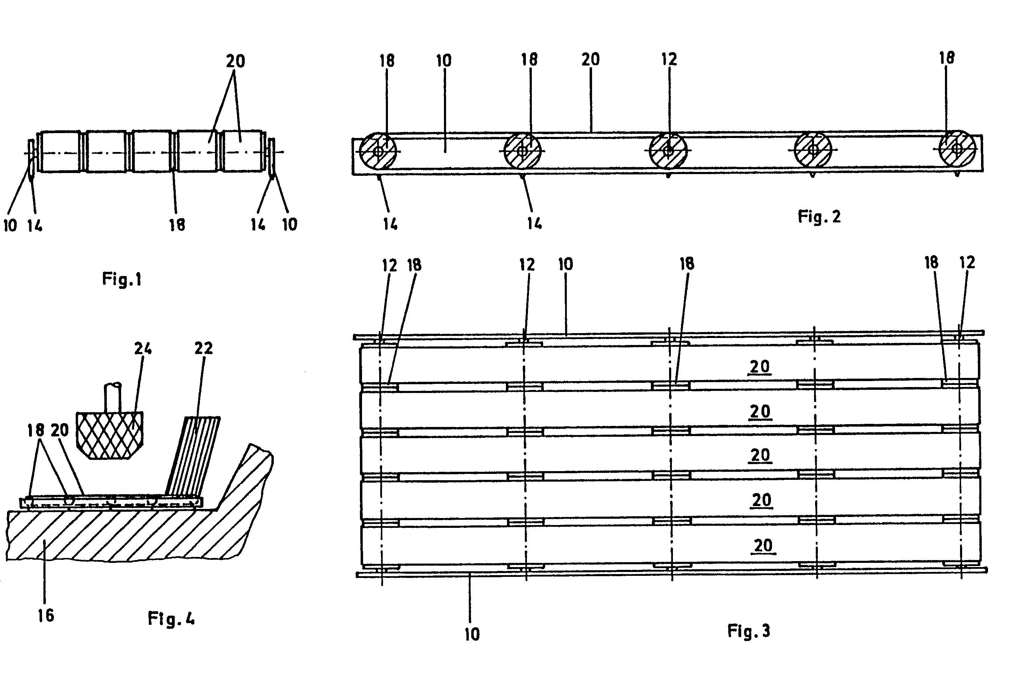

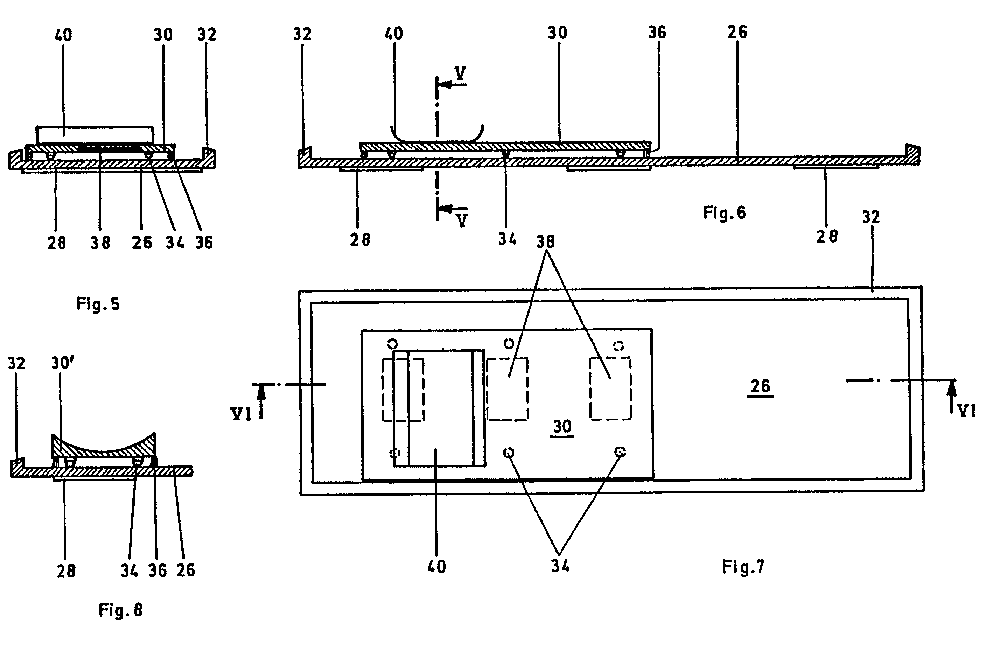

In der in den Figuren 1 bis 4 dargestellten ersten Ausführungsform weist die Vorrichtung zum Schonen der Schuhe des Fahrers eines Kraftfahrzeugs ein Gestell auf, das aus zwei Seitenteilen 10 besteht, die durch Achsen 12 miteinander verbunden sind. Die Seitenteile 10 weisen an ihrer unteren Kante Dorne 14 oder sonstige Befestigungsmittel auf, mit welchen das Gestell rutschfest auf den Boden 16 des Kraftfahrzeugs aufsteht, wie in Figur 4 gezeigt ist.

Die Achsen 12 tragen frei-drehbare Rollen 18 aus einem selbstschmierenden Kunststoff. Jede Achse 12 trägt dabei mehrere unabhängig voneinander drehbare Rollen, in dem dargestellten Ausführungsbeispiel z.B. 5 Rollen 18.

An den beiden äusseren Enden der Seitenteile 10 ist jeweils eine Achse 12 mit Rollen 18 gelagert, wobei über diese Rollen 18 straff-gespannte endlos umlaufende Bänder 20 geführt sind. Die Breite dieser Bänder 20 entspricht der Breite der jeweiligen Rollen 18, so daß die Bänder 20 unabhängig voneinander über die zugehörigen Rollen 18 bewegt werden können. Die Bänder 20 bestehen vorzugsweise aus einem flexiblen Kunststoff, der eine gewisse Oberflächenadhäsion aufweist.

Um ein Durchhängen der Bänder 20 zwischen den umlenkenden Rollen 18 zu verhindern, können im mittleren Bereich der Seitenteile 10 ein oder mehrere weitere Achsen 12 mit Rollen 18 angeordnet sein, die die Bänder 20 abstützen. In dem in der Zeichnung dargestellten Ausführungsbeispiel sind beispielsweise in gleichen Abständen 3 weitere Achsen 12 mit Rollen 18 zur Abstützung der Bänder 20 vorgesehen.

Der Durchmesser der Rollen 18, die Höhe der Seitenteile 10 und die Lagerung der Achsen 12 in den Seitenteilen 10 sind so gewählt, daß das untere Trumm der Bänder 20 geringfügig über der unteren Kante der Seitenteile 10 und damit über dem Boden 16 des Kraftfahrzeugs läuft, während das obere Trumm der Bänder 20 geringfügig über der oberen Kante der Seitenteile 10 läuft.

Wie in Figur 4 schematisch dargestellt ist, wird die Vorrichtung auf den Boden 16 des Kraftfahrzeugs unmittelbar vor dem Gaspedal 22 und dem Bremspedal 24 angeordnet, wobei sie durch die Dorne 14 in dieser Lage fixiert ist. Der Fahrer des Kraftfahrzeugs legt seinen Fuß auf die Bänder 20. Während der Fahrt kann der Fahrer seinen Fuß zwischen dem Gaspedal 22 und dem Bremspedal 24 hin- und herbewegen, ohne ihn von den Bändern 20 abzuheben. Aufgrund der Adhäsionswirkung der Bänder 20 nimmt der Schuh die verschiebbaren Bänder 20, auf denen er aufliegt, mit. Der Schuh bewegt sich daher nicht gegenüber der Auflagefläche, so daß keine den Schuh verschleißende Reibung auftritt.

Die Abmessung der Vorrichtung sind auf die Verwendungsbedingungen abgestimmt. Die Breite entspricht der Anordnung von Gaspedal 22 und Bremspedal 24 und beträgt somit etwa 30 bis 35 cm. Dadurch kann der Fuß des Fahrers auf den Bändern 20 aufliegend bequem beide Pedale erreichen. Die Abmessung quer zur Verschiebungsrichtung der Bänder 20 beträgt etwa 10 cm, so daß ausreichend Platz für das Auflegen des Fusses zur Verfügung steht.

Die Breite der einzelnen Bänder 20 beträgt beispielsweise 2 cm, wobei die Bänder 20 in einem minimalen gegenseitigen Abstand von 0,5 cm oder weniger angeordnet sind. Bei der Benutzung werden nur einige der Bänder 20, auf denen der Schuh des Benutzers tatsächlich aufliegt, bewegt, so daß nur die Reibung der diesen Bändern zugeordneten Rollen 18 überwunden werden muß. Die gesamte Höhe der Vorrichtung soll möglichst gering sein, damit die Höhenzuordnung des Fusses des Fahrers zu den Pedalen 22 und 24 nicht beeinträchtigt wird. Um andererseits einen ausreichenden Durchmesser der Rollen 18 zu gewährleisten, ist eine Höhe von etwa 1,5 cm zweckmäßig.

Ein zweites Ausführungsbeispiel ist in den Figuren 5 bis 7 dargestellt.

Auf den Boden 16 des Kraftfahrzeugs wird vor dem Gaspedal 22 und dem Bremspedal 24 eine Grundplatte 26 gelegt, die. z.B. mit Klettbefestigungen 28 am Boden 16 unverrutschbar festgehalten wird. Die Grundplatte 28 entspricht in ihrer Längen- und Breitenabmessung im wesentlichen der Vorrichtung des ersten Ausführungsbeispiels.

Auf der Grundplatte 26 ist eine Platte 30 angeordnet, die als Auflageeinrichtung für den Fuß des Fahrers dient. Die Platte 30 weist geringere Abmessungen als die Grundplatte 26 auf, so daß sie auf der Grundplatte 26 zwischen dem Gaspedal 22 und dem Bremspedal 24 und in gewissem Maße auch senkrecht hierzu, verschiebbar ist. Ein nach oben stehender Rand 32 der Grundplatte 26 dient als Anschlag und Wegbegrenzung für die Platte 30.

Um die Platte 30 auf der Grundplatte 26 leicht verschiebbar zu machen, weist die Platte 30 an ihrer Unterseite Kugeln 34 auf, die in geeigneten Käfigen drehbar gehalten sind. Die Käfige können beispielsweise aus der Platte 30 selbst ausgeformt sein oder an der Unterseite der Platte 30 befestigt sein. Anstelle der Kugeln 34 können auch halbkugelförmige Ausprägungen der Platte 30 vorgesehen sein, um eine leichgängige Verschiebung der Platte 30 auf der Grundplatte 26 zu erlauben.

An der Unterseite der Platte 30 ist längs deren Rand umlaufend ein Schleifglied 36 in Form einer Bürste angebracht, das mit der Oberfläche der Grundplatte 26 in Berührung steht. Dieses bürstenartige Schleifglied verhindert, daß sich auf der Grundplatte 26 ansammelnder Schmutz unter die Platte 30 gelangt und deren Verschiebbarkeit beeinträchtigt. Ausserdem bewirkt das Schleifglied 36 eine Abbremsung der Platte 30, so daß diese der Verschiebung durch den Fuß des Fahrers einen geringen Widerstand entgegensetzt und dem Fuß des Fahrers dadurch den erforderlichen Halt gibt.

Die Grundplatte 26 kann Durchbrüche aufweisen, durch die Schmutz, Sand und dergleichen hindurchfallen kann, so daß die Verschiebbarkeit der Platte 30 hierdurch nicht behindert wird. Die Durchbrüche müssen selbstverständlich außerhalb der Bewegungsbahnen der die Platte 30 abstützenden Kugeln 34 oder Ausprägungen liegen.

Falls die Platte 30 zu leicht verschiebbar ist und dem Fuß des Fahrers keinen ausreichenden Halt gibt, können an der Unterseite der Platte 30 zusätzlich Permanentmagnete 38 angebracht sein, die sich mit einem geringen Luftspalt über der aus einem ferromagnetischen Blech bestehenden Grundplatte 26 bewegen. Die Magnete 38 ziehen die Platte 30 gegen die Grundplatte 26 und erhöhen dadurch den Lagerdruck und damit die Reibung der Kugeln 34, so daß sich die Platte 30 schwerer verschieben läßt und dem Fuß des Fahrers einen stabileren Halt bietet.

Die Platte 30 kann an ihrer Oberfläche eine adhäsive Beschichtung, z.B. eine Gummi- oder Schaumstoffschicht aufweisen. Dadurch wird erreicht, daß der Schuh des Fahrers bei der Bewegung zwischen Gaspedal 22 und Bremspedal 24 nicht über die Oberfläche der Platte 30 rutscht, sondern diese mitnimmt.

Anstelle einer solchen adhäsiven Oberflächenschicht kann auf der Platte 30 auch eine Fersenmulde 40 vorgesehen sein, in welcher der Fahrer seinen Fuß einsetzt. Die Fersenmulde 40 bewirkt eine formschlüssige Mitnahme der Platte 30 bei der Bewegung des Fusses. Da sich die Stellung des Fusses gegenüber der Platte 30 im Winkel bei der Verschiebung der Platte 30 etwas ändert, ist die Fersenmulde 40 vorzugsweise flexibel an der Platte30 angebracht, so daß sie der Änderung der Winkelstellung des Fusses folgen kann, ohne daß eine reibende Bewegung des Schuhes gegenüber der Fersenmulde 40 auftritt.

Um dem Fuß des Fahrers trotz der Verschiebbarkeit der Platte 30 einen ausreichenden Halt zu geben, kann in einer weiteren Variante die Platte 30 durch Zugfedern, die zwischen die Platte 30 und die Grundplatte 26 eingesetzt sind, in einer Normalstellung gehalten werden, in welcher sich der Fuß des Fahrers am Gaspedal 22 befindet. Um zu bremsen, muß der Fahrer in dieser Ausführungsform den Fuß zusammen mit der Platte 30 gegen die relativ geringe Kraft dieser Zugfedern bewegen. In dieser Ausführungsform ist eine leichtgängige Führung der Platte 30 auf der Grundplatte 26 möglich.

In Figur 8 ist eine Abwandlung des Ausführungsbeispiels der Figuren 5 bis 7 dargestellt. Anstelle der auf der Platte 30 angebrachten Fersenmulde 40 ist die Platte 30' selbst als Fersenmulde ausgebildet, die unmittelbar auf der Grundplatte 26 verschiebbar gelagert ist.

Die gesamte Vorrichtung, insbesondere in der Ausführung der Fig. 5 - 8 die Fersenmulde, ist vorzugsweise mit Leuchtpunkten oder dergleichen versehen, damit der Fahrer auch bei Dunkelheit seinen Fuß problemlos in der Fersenmulde plazieren kann.

## Ansprüche

1. Vorrichtung zum Schonen der Schuhe des Fahrers eines Kraftfahrzeugs mit einer Auflageeinrichtung zum Auflegen des Fusses des Fahrers, dadurch gekennzeichnet, daß die Auflageeinrichtung von dem Gaspedal (22) und dem Bremspedal (24) des Kraftfahrzeugs in zumindest Querrichtung bewegbar angeordnet ist.

2. Vorrichtung nach Anspruch 1, dadurch gekennzeichnet, daß die Auflageeinrichtung aus einem oder mehreren parallelen Bändern (20) besteht.

3. Vorrichtung nach Anspruch 2, dadurch gekennzeichnet, daß das Band/die Bänder (20) endlos umlaufende Bänder sind.

4. Vorrichtung nach Anspruch 3, dadurch gekennzeichnet, daß das Band/die Bänder (20) straff gespannt über frei-drehbare Rollen (18) umlaufen.

5. Vorrichtung nach Anspruch 3 oder 4, dadurch gekennzeichnet, daß bei mehreren Bändern (20) jedes über gesondert drehbare Rollen (18) umläuft.

6. Vorrichtung nach Anspruch 4 oder 5, dadurch gekennzeichnet, daß in Bewegungsrichtung des Bandes/der Bänder (20) zwischen den umlenkenden Rollen (18) weitere frei-drehbare Rollen (18) das Band/die Bändern (20) stützen.

7. Vorrichtung nach einem der Ansprüche 2 bis 6, dadurch gekennzeichnet, daß die Rollen (18) in einem am Boden (16) des Kraftfahrzeugs festlegbaren Gestell (Seitenteile 10, Achsen 12) gelagert sind.

8. Vorrichtung nach einem der Ansprüche 2 bis 7, dadurch gekennzeichnet, daß das Band/die Bänder (20) aus einem flexiblen Kunststoff bestehen.

9. Vorrichtung nach einem der Ansprüche 2 bis 8, dadurch gekennzeichnet, daß die Rollen (18) aus einem selbstschmierenden Kunststoff bestehen.

10. Vorrichtung nach Anspruch 1, dadurch gekennzeichnet, daß die Auflageeinrichtung aus einer Platte (30) besteht.

11. Vorrichtung nach Anspruch 10, dadurch gekennzeichnet, daß die Platte (30) auf einer Grundplatte (26) frei verschiebbar gelagert ist.

12. Vorrichtung nach Anspruch 11, dadurch gekennzeichnet, daß die Platte (30) mittels in Käfigen gehaltener Kugeln (34) auf der Grundplatte (26) abgestützt ist.

13. Vorrichtung nach Anspruch 11, dadurch gekennzeichnet, daß die Platte (30) mittels Vorsprüngen auf der Grundplatte (26) abgestützt ist.

14. Vorrichtung nach einem der Ansprüche 11 bis 13, dadurch gekennzeichnet, daß der Bewegungsweg der Platte (30) durch seitliche Anschläge (32) der Grundplatte (26) begrenzt.

15. Vorrichtung nach einem der Ansprüche 11 bis 14, dadurch gekennzeichnet, daß die Bewegung der Platte (30) abgebremst ist.

16. Vorrichtung nach Anspruch 15, dadurch gekennzeichnet, daß zur Abbremsung die Platte (30) gegen die Grundplatte (26) ziehende Magnete (38) vorgesehen sind.

17. Vorrichtung nach Anspruch 15, dadurch gekennzeichnet, daß zur Abbremsung Schleifglieder (36) an der Platte (30) angebracht sind, die mit der Grundplatte (26) in Berührung stehen.

18. Vorrichtung nach einem der Ansprüche 10 bis 17, dadurch gekennzeichnet, daß die Platte (30) eine adhäsive Oberflächenschicht aufweist.

19. Vorrichtung nach einem der Ansprüche 10 bis 17, dadurch gekennzeichnet, daß auf der Platte (30) eine Fersenmulde (40) angeordnet ist.

20. Vorrichtung nach Anspruch 19, dadurch gekennzeichnet, daß die Fersenmulde (40) flexibel an der Platte (30) angebracht ist.

21. Vorrichtung nach einem der Ansprüche 10 bis 17, dadurch gekennzeichnet, daß die Platte (30') als Fersenmulde ausgebildet ist.

22. Vorrichtung nach einem der Ansprüche 10 bis 21, dadurch gekennzeichnet, daß die Platte (30) durch Federkräfte in ihrer Normalstellung gehalten ist.

23. Vorrichtung nach einem der Ansprüche 11 bis 22, dadurch gekennzeichnet, daß die Grundplatte (26) am Boden (16) des Kraftfahrzeugs festlegbar ist.

## Claims

1. A device for protecting the shoes of the driver of a motor vehicle comprising a supporting device on which the foot of the driver can be placed, characterized in that the supporting device is arranged in front of the accelerator pedal (22) and the brake pedal (24) so that it is movable at least transversely.

2. A device according to claim 1, characterized in that the supporting device consists of one or more parallel belts (20).

3. A device according to claim 2, characterized in that the belt or belts (20) are endless rotatable belts.

4. A device according to claim 3, characterized in that the belt or belts (20) revolve(s) tightly tensioned around freely rotatable rollers (18).

5. A device according to claim 3 or 4, Characterized in that when there are a plurality of belts (20) they all revolve around separate rotatable rollers (18).

6. A device according to claim 4 or 5, characterized in that additional freely rotatable rollers (18), positioned in the direction of movement of the belt or belts (20) between the direction changing rollers (18), support the belt or belts (20).

7. A device according to any one of claims 2 to 6, characterized in that the rollers (18) are mounted in a frame (side elements 10, axles 12) which can be fixed to the floor (16) of the motor vehicle.

8. A device according to any one of claims 2 to 7, characterized in that the belt or belts (20) are made of a flexible plastic.

9. A device according to any one of claims 2 to 8, characterized in that the rollers (18) are made of a self-lubricating plastic.

10. A device according to claim 1, characterized in that the supporting device consists of a plate (30).

11. A device according to claim 10, characterized in that the plate (30) is mounted so that it is freely movable on a base plate (26).

12. A device according to claim 11, characterized in that the plate (30) is supported on the base plate (26) by means of ball bearings (34) held in cages.

13. A device according to claim 11, characterized in that the plate (30) is supported on the base plate (26) by means of projections.

14. A device according to any one of claims 11 to 13, characterized in that the extent of movement of the plate (30) is limited by lateral stops (32) on the base plate (26).

15. A device according to any one of claims 11 to 14, characterized in that the movement of the plate (30) is braked.

16. A device according to claim 15, characterized in that, for the braking, magnets (38) drawing the plate (30) towards the base plate (26) are provided.

17. A device according to claim 15, characterized in that, for the braking, friction elements (36) are fixed on the plate (30) which are in contact with the base plate (26).

18. A device according to any one of claims 10 to 17, characterized in that the plate (30) comprises an adhesive surface layer.

19. A device according to any one of claims 10 to 17, characterized in that a heel trough (40) is arranged on the plate (30).

20. A device according to claim 19, characterized in that the heel trough (40) is mounted flexibly on the plate (30).

21. A device according to any one of claims 10 to 17, characterized in that the plate (30') is built as a heel trough.

22. A device according to any one of claims 10 to 21, characterized in that the plate (30) is held in its normal position by spring action.

23. A device according to any one of claims 11 to 22, characterized in that the base plate (26) can be fixed to the floor (16) of the motor vehicle.

## Revendications

1. Dispositif pour ménager les chaussures du conducteur d'un véhicule, avec un dispositif d'appui pour supporter le pied du conducteur, caractérisé en ce que le dispositif d'appui est disposé devant l'accélérateur (22) et la pédale de frein (24) du véhicule, avec une possibilité de déplacement dans le sens transversal, du moins.

2. Dispositif suivant la revendication 1, caractérisé en ce que le dispositif d'appui se compose d'une ou de plusieurs bandes (20) parallèles.

3. Dispositif suivant la revendication 2, caractérisé en ce la/les bande/s (20) sont des bandes rotatives sans fin.

4. Dispositif suivant la revendication 3, caractérisé en ce que la/les bande/s (20), soumises à une tension élevée, défilent sur des galets (18) qui tournent librement.

5. Dispositif suivant l'une des revendications 3 et 4, caractérisé en ce que, dans le cas de plusieurs bandes (20), chacune d'entre elles défile sur des galets (18), qui tournent séparément.

6. Dispositif suivant l'une des revendications 4 et 5, caractérisé en ce que, dans le sens de déplacement de la/les bande/s (20), d'autres galets (18) à rotation libre supportent la/les bande/s (20) entre les galets de renvoi (18).

7. Dispositif suivant l'une quelconque des revendications 2 à 6, caractérisé en ce que les galets (18) sont logés dans une monture (parties latérales 10, axes 12), qui peut être fixée sur un plancher (16) du véhicule.

8. Dispositif suivant l'une quelconque des revendications 2 à 7, caractérisé en ce que la/les bande/s (20) se composent d'une matière plastique souple.

9. Dispositif suivant l'une quelconque des revendications 2 à 8, caractérisé en ce que les galets (18) se composent d'une matière plastique autolubrifiante.

10. Dispositif suivant la revendication 1, caractérisé en ce que le dispositif d'appui se compose d'une plaque (30).

11. Dispositif suivant la revendication 10, caractérisé en ce que la plaque (30) est montée et peut se déplacer librement sur une plaque de base (26).

12. Dispositif suivant la revendication 11, caractérisé en ce que la plaque (30) est supportée sur la plaque de base (26) par des billes (34), maintenues dans des cages.

13. Dispositif suivant la revendication 11, caractérisé en ce que la plaque (30) est supportée sur la plaque de base (26) par des saillies.

14. Dispositif suivant l'une quelconque des revendications 11 à 13, caractérisé en ce que la trajectoire de la plaque (30) est limitée par des butées latérales (32) de la plaque de base (26).

15. Dispositif suivant l'une quelconque des revendications 11 à 14, caractérisé en ce que le mouvement de la plaque (30) est freiné.

16. Dispositif suivant la revendication 15, caractérisé en ce que des aimants (38), qui attirent la plaque (30) contre la plaque de base (26), sont prévus pour le freinage.

17. Dispositif suivant la revendication 15, caractérisé en ce que des organes de frottement (36), qui contactent la plaque de base (26), sont montés sur la plaque (30) pour le freinage.

18. Dispositif suivant l'une quelconque des revendications 10 à 17, caractérisé en ce que la plaque (30) présente une couche superficielle adhésive.

19. Dispositif suivant l'une quelconque des revendications 10 à 17, caractérisé en ce qu'un support de talon (40) est disposé sur la plaque (30).

20. Dispositif suivant la revendication 19, caractérisé par un montage flexible du support de talon (40) sur la plaque (30).

21. Dispositif suivant l'une quelconque des revendications 10 à 17, caractérisé en ce que la plaque (30') est réalisée sous forme de support de talon.

22. Dispositif suivant l'une quelconque des revendications 10 à 21, caractérisé en ce que la plaque (30) est maintenue dans sa position normale par des forces d'élasticité.

23. Dispositif suivant l'une quelconque des revendications 11 à 22, caractérisé en ce que la plaque de base (26) peut être fixée sur le plancher (16) du véhicule.

Fig.1

Fig. 2

Fig. 3

Fig. 4

EP 0 293 727 B1

Fig. 5

Fig. 6

Fig. 7

Fig. 8